# EUROPEAN PATENT APPLICATION

(11) **EP 4 675 620 A1**
(43) Date of publication of application: **07.01.2026**
(21) Application number: 24764278.8
(22) Date of filing: 26.02.2024
(51) Int. Cl.: G11B 27/031, G06F 3/0484, H04N 21/854, H04N 21/43

(54) **VIDEO PROCESSING METHOD AND APPARATUS, AND NONVOLATILE COMPUTER-READABLE STORAGE MEDIUM**

(30) Priority: 28.02.2023 CN 202310183513
(71) Applicant: Lemon Inc., Grand Cayman, KY1-1205 (KY)
(72) Inventor: YI, Tianya, Beijing 100028 (CN)
(74) Representative: Isarpatent
(86) International application number: PCT/SG2024/050099
(87) International publication number: WO 2024/181915

(57) **Abstract**

The present disclosure relates to a video processing method and apparatus, and a non-transitory computer-readable storage medium, and relates to the field of media processing. The video processing method comprises: displaying a video presentation interface, the video presentation interface presenting a video in a media stream; receiving an interactive operation of a user for the video; in response to the interactive operation of the user for the video, entering an element presentation page of the video; and presenting related information of a plurality of first media elements in the video on the element presentation page.

## Description

### CROSS-REFERENCE TO RELATED APPLICATIONS

This present application is based on and claims priority from Chinese patent application No. 202310183513.X filed on February 28, 2023, the content of which is hereby incorporated by reference in its entirety into the present application.

### TECHNICAL FIELD

The present disclosure relates to the technical field of media processing, and in particular, to a video processing method, a video processing apparatus, and a non-transitory computer-readable storage medium.

### BACKGROUND

A video template is one common function of short video and social media software. When the template is used, a user needs to preview an effect of the template, and uploads corresponding media elements based on distribution of clips contained in the template.

In the related art, the corresponding media elements are uploaded on a clips-uploading page.

### SUMMARY

According to some embodiments of the present disclosure, there is provided a video processing method, comprising: displaying a video presentation interface, the video presentation interface presenting a video in a media stream; receiving an interactive operation of a user for the video; in response to the interactive operation of the user for the video, entering an element presentation page of the video; and presenting at least one element presentation area on the element presentation page, the at least one element presentation area comprising related information of a plurality of first media elements in the video.

According to other embodiments of the present disclosure, there is provided a video processing apparatus, comprising: a jumping unit configured to receive an interactive operation of a user for a video in a media stream, and in response to the interactive operation of the user for the video in the media stream, enter an element presentation page of the video; and a presentation unit configured to display a video presentation interface, and present at least one element presentation area on the element presentation page, the at least one element presentation area comprising related information of a plurality of first media elements in the video, the video presentation interface presenting the video in the media stream.

According to still other embodiments of the present disclosure, there is provided a video processing apparatus, comprising: a memory; and a processor coupled to the memory, the processor being configured to perform, based on instructions stored in the memory, the video processing method in any of the above embodiments.

According to further embodiments of the present disclosure, there is provided a non-transitory computer-readable storage medium having thereon stored a computer program which, when executed by a processor, implements the video processing method in any of the above embodiments.

According to further embodiments of the present disclosure, there is provided a computer program including instructions which when executed by a processor, cause the processor to implement the video processing method in any of the above embodiments.

### BRIEF DESCRIPTION OF THE DRAWINGS

The accompanying drawings, which constitute a part of this specification, illustrate embodiments of the present disclosure and together with the description, serve to explain the principles of the present disclosure.

The present disclosure may be more clearly understood according to the following detailed description by referring to the accompanying drawings, in which:
Fig. 1 illustrates a flow diagram of a video processing method according to some embodiments of the present disclosure;
Figs. 2a to 2b illustrate schematic diagrams of an element presentation page according to some embodiments of the present disclosure;
Fig. 3 illustrates a schematic diagram of an element upload page according to some embodiments of the present disclosure;
Fig. 4 illustrates a block diagram of a video processing apparatus according to some embodiments of the present disclosure;
Fig. 5 illustrates a block diagram of a video processing apparatus according to other embodiments of the present disclosure;
Fig. 6 illustrates a block diagram of a video processing apparatus according to still other embodiments of the present disclosure.

### DETAILED DESCRIPTION

Various exemplary embodiments of the present disclosure will now be described in detail with reference to the accompanying drawings. It should be noted that: the relative arrangements, numerical expressions and numerical values of components and steps set forth in these embodiments do not limit the scope of the present disclosure unless specifically stated otherwise.

Meanwhile, it should be understood that a size of each portion shown in the drawings is not drawn according to an actual scale for the convenience of description.

The following description of at least one exemplary embodiment is merely illustrative in nature and is in no way used as any limitation on this disclosure and its application or use.

Techniques, methods, and devices known to one of ordinary skill in the related art might not be discussed in detail, but the techniques, methods, and devices should be considered as part of the description where appropriate.

In all examples shown and discussed herein, any specific value should be construed as exemplary only and not as limiting. Therefore, other examples of the exemplary embodiment may have different values.

It should be noted that: similar reference numbers and letters refer to similar items in the following drawings, and thus, once a certain item is defined in one drawing, it need not be discussed further in subsequent drawings.

The inventors of the present disclosure have found that the related art described above has the following problem: the distribution of the media elements contained in the video template is unclear, as a result, it is unable to clearly present characteristics of the video template.

As previously described, the preview of the video template and the upload of the media element are implemented separately, that is, the two functions are put in two scenarios and not combined together. This results in the unclear distribution of the media elements contained in the video template, so that the characteristics of the video template cannot be clearly presented.

According to the present disclosure, the preview of the video template and the upload of the media elements are combined in one scenario to be implemented, which helps to better and conveniently understood the structural characteristics of the video template, thereby improving the effect of the video generated by the user according to the video template.

In view of this, the present disclosure provides a video processing technical solution, capable of clearly presenting the characteristics of the video template.

For example, the technical solutions of the present disclosure can be implemented by the following embodiments.

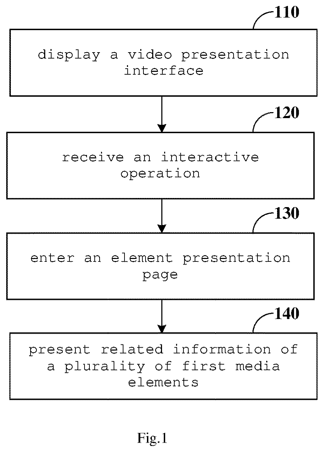

Fig. 1 illustrates a flow diagram of a video processing method according to some embodiments of the present disclosure.

As shown in Fig. 1, in step 110, a video presentation interface is displayed, the video presentation interface presenting a video in a media stream.

In step 120, an interactive operation of a user for the video is received.

In step 130, in response to the interactive operation of the user for the video in the media stream, an element presentation page of the video is entered. For example, the element presentation page comprises an element presentation area for presenting related information of a plurality of first media elements, and a preview playback area for playing back the video.

For example, the element presentation page comprises a preview playback area for playing back the video.

For example, the user is viewing a certain video in a pushed video stream, and by clicking a specified control on the video playback page, the user can enter an element presentation page for a video template adopted by the video. In this way, the user can, when viewing the video, quickly and clearly know formation and structure of the video template adopted by the video, thereby conveniently creating the video based on the video template of the video and improving the effect of the video creation function.

In step 140, at least one element presentation area on the element presentation page is presented, the at least one element presentation area comprising related information of a plurality of first media elements in the video. For example, the related information comprises at least one of a number, a duration, or an arrangement order of the first media elements.

In the above embodiments, the element presentation page corresponding to the video is entered directly from the video viewed by the user, to present the distribution of the media elements contained in the video template corresponding to the video. In this way, the characteristics of the video template can be clearly presented.

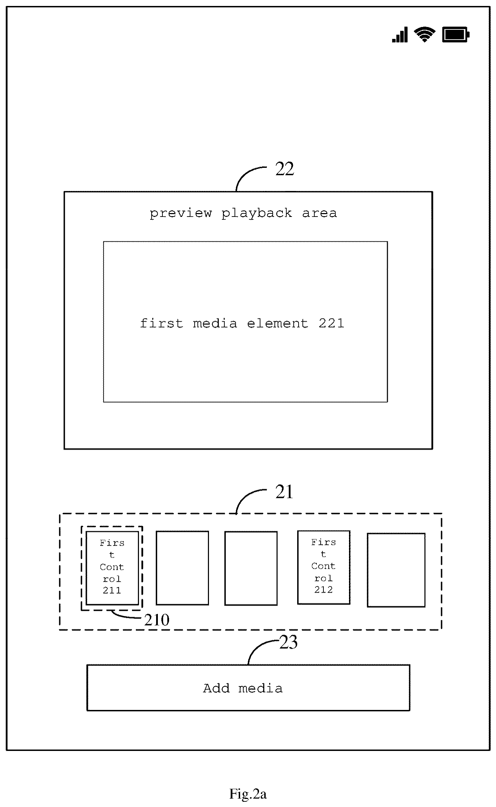

Figs. 2a to 2b illustrates schematic diagrams of an element presentation page according to some embodiments of the present disclosure.

As shown in Fig. 2a, in some embodiments, in response to the user entering the element presentation page, the plurality of first media elements of the video are sequentially played back in a preview playback area 22 of the element presentation page. For example, the user can control the playback or pause by clicking the preview playback area 22. For example, in response to the user entering the element presentation page, the playback of the video automatically starts.

In some embodiments, in an element presentation area 21 of the element presentation page, a plurality of first controls are presented, each of the plurality of first control corresponding to one of the plurality of first media elements. For example, the plurality of first controls are arranged in an order in which the plurality of first media elements are played back in the video. For example, related information of a corresponding first media element can be presented on the first control.

For example, the first controls for replacing the media elements are sequentially displayed in an order of the media elements in a video template corresponding to the video.

In some embodiments, in response to the video being played back to a current first media element 221 of the video in the preview playback area 22 of the element presentation page, a first control 211 corresponding to the current first media element 221 is indicated by using a specified display mode. For example, a cursor 210 is positioned onto the first control 211 corresponding to the current first media element 221.

For example, as the video is played back, a position of the current first control or a position of the cursor is switched following the video playback progress.

In some embodiments, in the case where all of the first controls cannot be presented in the at least one element presentation area 21, the user may perform an interactive operation (e.g., swipe left/right, or clicking a corresponding control), to display, in the at least one element presentation area 21, a first control that cannot be currently displayed.

For example, in the case where there are a large number of first controls, all of the first controls may be viewed by a swipe left/right operation. While the swipe operation is performed, the video playback progress changes following the swipe operation; and the cursor may also move following the swipe operation.

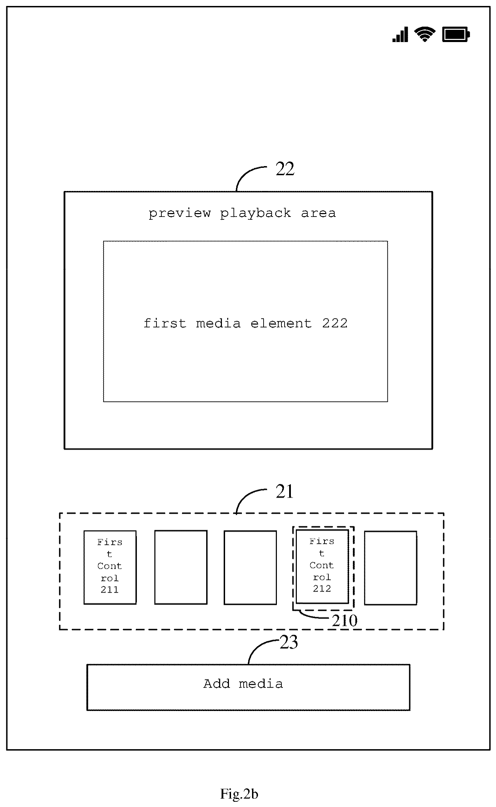

As shown in Fig. 2b, in some embodiments, in response to an interactive operation of the user on a target first control 212, the playback progress in the preview playback area 22 of the element presentation page is switched to a first media element 222 corresponding to the target first control 212.

For example, in the case where the user swipes horizontally (i.e., starts swipe) in an area where the first control is located, the playback of the video is paused. In the case where the user releases his hand (i.e., stops swipe), the playback progress is anchored to a target first control selected by the cursor and a video playback state (continuing the playback or remaining the pause) before the swipe starts is kept.

In some embodiments, in the case where the video is being played back in the preview playback area 22 of the element presentation page, in response to the interactive operation of the user on the target first control 212, the playback of the video is paused; and in the preview playback area 22, starting from the first media element 222 corresponding to the target first control 212, the playback of the video is continued.

For example, in response to the user starting a swipe operation from the current first control 211, the playback of the video is paused; and in response to the user ending the swipe operation at the target first control 212, the playback of the video is continued. For example, if the video is played back, when the user performs an operation such as drag in an area where the first control is located, the playback of the video is paused; and when the user releases his hand, the playback of the video is continued.

In some embodiments, in the case where the playback of the video is paused in the preview playback area 22 of the element presentation page, in response to the interactive operation of the user on the target first control 212, the playback progress in the preview playback area 22 is paused at the first media element 222 corresponding to the target first control 212. For example, if the current playback of the video is paused, when the user performs an operation such as drag in an area where the first control is located, pausing the playback of the video is continued; and when the user releases his hand, continuing to pause the playback of the video.

For example, in response to the user ending the swipe operation at the target first control 212, the playback progress is paused at the first media element 222 corresponding to the target first control 212.

In some embodiments, a previous page (e.g., the video playback page in the video stream) may be returned to by selecting a return function (e.g., clicking a close button in an upper left corner of the element presentation page).

In some embodiments, the user may enter a filling-element stage by clicking a control 23 on the bottom of the element presentation page or clicking a symbol (e.g., a plus symbol, etc.) on the first control. For example, an upload button on the bottom of the page or a plus symbol on the first control is clicked to open an album page of the user; and the user may select or shoot a media element to insert the media element into the video template.

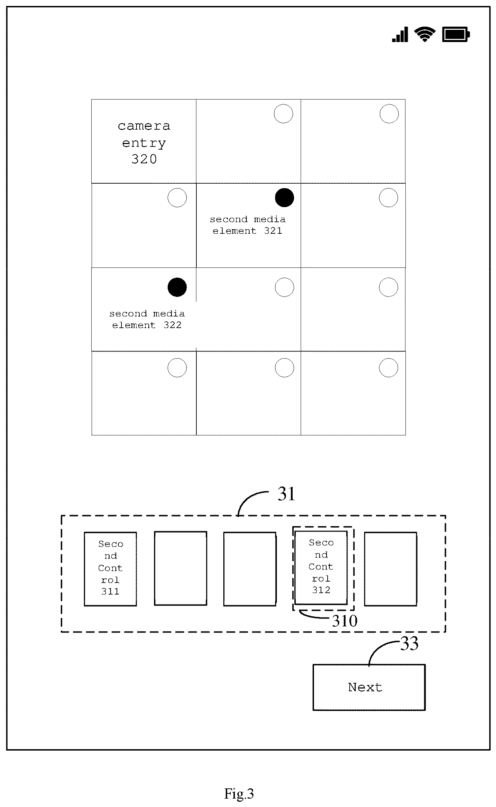

Fig. 3 illustrates a schematic diagram of an element upload page according to some embodiments of the present disclosure.

As shown in Fig. 3, in some embodiments, in response to the user selecting an element upload function on the element presentation page, an element upload page is entered, which comprises at least one second media element (a box with a circle control in Fig. 3), and a to-be-released video of the user is generated by using a selected second media element by the user on the element upload page.

For example, after an album page of the user is opened, media elements in the album are ordered by time (e.g., from latest to earliest); and a camera entry 320 may also be displayed on the album page, for triggering a shooting function.

In some embodiments, in response to the user selecting, on the element presentation page, an element upload function by a first control (e.g., the first control 212) corresponding to any first media element, the element upload page is entered, on which the user is instructed to select a second media element corresponding to related information of any first media element 222.

For example, the element upload page comprises a second control 312 corresponding to the first control 212. In response to the user selecting the element upload function on the first control 212, a cursor 310 is positioned onto the second control 312 corresponding to the first control 212.

For example, if the user enters an album page by clicking a first control in the element presentation page, the cursor is, on the element upload page, anchored to a position of a second control corresponding to the first control.

In some embodiments, in response to the user selecting, on the element presentation page, the element upload function by a third control 23, the element upload page is entered. For example, the third control 23 has no correspondence with the plurality of first media elements. The user is, on the element upload page, instructed to select in order the second media elements corresponding to the related information of the plurality of first media elements; and generate the to-be-released video based on a selection order of the second media elements.

For example, the element upload page comprises a plurality of second controls corresponding to the plurality of first media elements. The cursor 310 is moved onto the second control 312 corresponding to the current first media element ( i.e., the first media element 222).

For example, if the user enters the album page by clicking an upload button on the bottom of the element presentation page, the cursor is, on the element upload page, anchored to a unfilled second control arranged in a first place among the unfilled second controls.

In some embodiments, by clicking an existing media element in an album on the album page, the user may insert the existing media element into the selected second control.

For example, by clicking any media element, the user may preview or select the media element. If a circle control at an upper right corner of a media element is clicked, the media element is selected, and the color of the circle control will change; and if an area outside the circle control on the media element is clicked, the media element is previewed.

For example, after any media element is selected by clicking, the selected media element is inserted into the second control currently selected by the cursor, and then the cursor is moved to a next blank second control in order.

In some embodiments, in the case where a duration of the selected second media element 322 is not matched with a duration of the corresponding first media element 222, the selected second media element 322 is processed so that a duration of the selected second media element 322 processed is matched with the duration of the corresponding first media element 222.

For example, in the case where the selected second media element 322 is a video element and the duration thereof is less than that of the corresponding first media element 222, the video element is subjected to slow-playback processing, so that a duration of the video element subjected to the slow-playback processing is equal to that of the corresponding first media element 222.

For example, in the case where the selected second media element 322 is a video element and the duration thereof is greater than that of the corresponding first media element, the video element is subjected to interception processing, so that a duration of the video element subjected to the interception processing is equal to that of the corresponding first media element 222.

For example, in the case where the selected second media element 322 is a video element and the duration thereof is greater than that of the corresponding first media element 222, in response to the user selecting an element editing control, an editing page is displayed; and the video element is subjected to interception processing according to a clip of the video element selected by the user on the editing page.

For example, in the case where the selected second media element 321 is a picture element, a display time of the picture element is set to the duration of the corresponding first media element 221.

For example, if a duration of a filled second media element is not matched with a duration of the first media element corresponding to the second control, when the duration of the second media element is less than that of the first media element, the second media element is uniformly slowed down to adapt to the duration of the first media element; when the duration of the second media element is greater than that of the first media element, a playback speed of the second media element is kept unchanged, and first few seconds (or first few minutes) of the second media element with a duration equal to that of the first media element is selected; when the second media element is a picture, its display duration is directly matched with the duration of the second media.

For example, in response to the user clicking an unfilled second control, the cursor is moved to the second control to fill it with the second media element. After all of the second controls are filled, the album page is set to gray (i.e., set to be non-interactable) in whole, so that in this case, the second media element may no longer be newly added and the cursor is no longer displayed.

In some embodiments, by clicking the camera entry 320, the page may jump to a shoot page of a camera to shoot the second media element for insertion into the selected second control.

For example, after the shoot page is entered, accompanying music of a first media element corresponding to the selected second control is brought into the page at the same time, and the accompanying music is set to gray and is irreplaceable.

For example, various shoot functions (e.g., filtering, parameter adjustment, and the like) that are originally present in the shoot page may be retained.

In some embodiments, by clicking a shoot button, shoot of the second media element starts. Only the shoot of the second media element having a duration corresponding to a duration (duration upper limit) of the second control may be supported. For example, after the shoot starts, the user cannot click the shoot button again to pause the shoot, and until the duration upper limit of the shoot is reached, the shoot is automatically interrupted; the current page stays on the shoot page and the shot second media element is circularly played back in the shoot page; after the shoot is finished, the user can click re-shoot or insert the shot second media element into the second control; if a re-shoot control is clicked, return to the above shooting process; and if a confirm control is clicked, return to the album page, and the currently shot second media element is inserted into the second control.

In some embodiments, the second media element that has already been inserted into the second control may be deleted. For example, a selection button (e.g., a circle in Fig. 3) on the second media element may be clicked, or a button on a second control filled with the second media element may be clicked to deselect the second media element; and the second control corresponding to the second media element is cleared, and a cursor on the second control is displayed. The cleared second control can be displayed centrally.

In some embodiments, a playback interval of the selected second media element may be adjusted. For example, in the case where the duration of the selected second media element is greater than a duration corresponding to the second control, an element editing button is displayed on the second control; the element editing button or the selected second media element is clicked to enter an editing page, to adjust the playback interval.

For example, a complete track of the second media element may be presented in the editing page, to play back selected clips in a selection box circularly; by dragging leftward/rightward the selection box, a selected playback interval can be switched.

In some embodiments, in response to the user confirming (e.g., perform an interactive operation on the control 33), on the element upload page, a plurality of specified second media elements (e.g., second media element 321, 322, etc.) corresponding to the related information of the plurality of first media elements, it is prompted in an area 31 where the plurality of second controls are located that the plurality of specified second media elements are being uploaded.

For example, display brightness of thumbnails of the plurality of specified second media elements in the area where the plurality of second controls are located is changed, to prompt that the plurality of specified second media elements are being uploaded. For example, the thumbnails may be highlighted in an arrangement order.

For example, in response to the user clicking a next button, it is determined whether all the current second controls are filled with the second media element; if all the second controls have not been completely filled yet, the user is, through a message box (such as a toast prompt), prompted not to be allowed to enter a next step; and if all the second controls have been filled, a special effect for prompting the user that the loading is in progress is presented, and the next step is entered to preview a generated video.

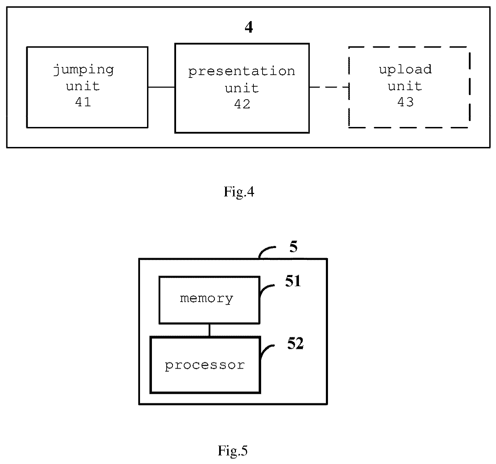

Fig. 4 illustrates a block diagram of a video processing apparatus according to some embodiments of the present disclosure.

As shown in Fig. 4, the video processing apparatus 4 comprises: a jumping unit 41 configured to receive an interactive operation of a user for a video in a media stream, and in response to the interactive operation of the user for the video in the media stream, enter an element presentation page of the video; and a presentation unit 42 configured to display a video presentation interface, and present, on the element presentation page, related information of a plurality of first media elements in the video, the video presentation interface presenting the video in the media stream.

In some embodiments, the jumping unit 41 enters, in response to the user selecting an element upload function on the element presentation page, an element upload page, which comprises at least one second media element. The video processing apparatus 4 further comprises an upload unit 43 configured to generate a to-be-released video of the user by using a selected second media element by the user on the element upload page.

In some embodiments, the element presentation page comprises an element presentation area for presenting the related information of the plurality of first media elements, and a preview playback area for playback of the video.

In some embodiments, the presentation unit 42 presents, in the at least one element presentation area of the element presentation page, a plurality of first controls, each of the plurality of first control corresponding to one of the plurality of first media elements.

In some embodiments, the plurality of first controls are arranged in an order in which the plurality of first media elements are played back in the video.

In some embodiments, the presentation unit 42 switches, in response to an interactive operation of the user on a target first control, playback progress in the preview playback area of the element presentation page to a first media element corresponding to the target first control.

In some embodiments, the presentation unit 42 pauses, in the case where the video is being played back in the preview playback area of the element presentation page, the playback of the video in response to the interactive operation of the user on the target first control; and continues, in the preview playback area, the playback of the video starting from the first media element corresponding to the target first control.

In some embodiments, the interactive operation comprises a swipe operation from a current first control to the target first control, the presentation unit 42 pausing the playback of the video in response to the user starting the swipe operation from the current first control, and continuing the playback of the video in response to the user ending the swipe operation at the target first control.

In some embodiments, the presentation unit 42 pauses, in the case of pausing the playback of the video in the preview playback area of the element presentation page, the playback progress in the preview playback area at the first media element corresponding to the target first control in response to the interactive operation of the user on the target first control.

In some embodiments, the interactive operation comprises a swipe operation from a current first control to the target first control, the presentation unit 42 pausing the playback progress at the first media element corresponding to the target first control in response to the user ending the swipe operation at the target first control.

In some embodiments, the presentation unit 42 indicates, in response to the video being played back to a current first media element of the video in the preview playback area of the element presentation page, a first control corresponding to the current first media element by using a specified display mode.

In some embodiments, the presentation unit 42 positions a cursor onto the first control corresponding to the current first media element.

In some embodiments, the presentation unit 42 presents, on any first control, related information of a first media element corresponding to the any first control.

In some embodiments, the presentation unit 42, in response to the user entering the element presentation page, plays back the plurality of first media elements of the video sequentially in the preview playback area of the element presentation page.

In some embodiments, the jumping unit 41 enters the element upload page in response to the user selecting, on the element presentation page, the element upload function by a first control corresponding to any first media element; and the upload unit 43 instructs, on the element upload page, the user to select a second media element corresponding to related information of the any first media element 222.

In some embodiments, the element upload page comprises a second control corresponding to the first control, the upload unit 43 positioning the cursor on the second control corresponding to the first control in response to the user selecting the element upload function on the first control.

In some embodiments, the jumping unit 41 enters the element upload page in response to the user selecting, on the element presentation page, the element upload function by a third control; and the upload unit 43 instructs, on the element upload page, the user to select the second media elements corresponding to the related information of the plurality of first media elements in order; and generates the to-be-released video based on a selection order of the second media elements.

In some embodiments, the element upload page comprises a plurality of second controls corresponding to the plurality of first media elements, the presentation unit 42 moving the cursor onto a second control corresponding to the current first media element.

In some embodiments, the upload unit 43 processes, in the case where a duration of the selected second media element is not matched with a duration of the corresponding first media element of the selected second media element, the selected second media element, so that a duration of the selected second media element processed is matched with the duration of the corresponding first media element.

In some embodiments, the presentation unit 42 performs at least one of: in the case where the selected second media element is a video element and the duration thereof is less than that of the corresponding first media element, performing slow playback processing on the video element, so that a duration of the video element after the slow playback processing is equal to that of the corresponding first media element; in the case where the selected second media element is a video element and the duration thereof is greater than that of the corresponding first media element, performing interception processing on the video element, so that a duration of the video element after the interception processing is equal to that of the corresponding first media element; or, in the case where the selected second media element is a picture element, setting a display time of the picture element to the duration of the corresponding first media element.

In some embodiments, the upload unit 43 displays, in the case where the selected second media element is a video element and the duration thereof is greater than that of the corresponding first media element, an editing page in response to the user selecting an element editing control; and performs interception processing on the video element according to a clip of the video element that is selected by the user on the editing page.

In some embodiments, the presentation unit 42 prompts, in response to the user confirming, on the element upload page, a plurality of specified second media elements corresponding to the related information of the plurality of first media elements, in an area where the plurality of second controls are located, that the plurality of specified second media elements are being uploaded.

For example, the presentation unit 42 changes display brightness of thumbnails of the plurality of specified second media elements in the area where the plurality of second controls are located, to prompt that the plurality of specified second media elements are being uploaded.

Fig. 5 illustrates a block diagram of a video processing apparatus according to other embodiments of the present disclosure.

As shown in Fig. 5, the video processing apparatus 5 of this embodiment comprises: a memory 51 and a processor 52 coupled to the memory 51, the processor 52 being configured to perform, based on instructions stored in the memory 51, the video processing method in any of the embodiments of the present disclosure.

The memory 51 may comprise, for example, a system memory, a fixed non-transitory storage medium, and the like. The system memory has thereon stored, for example, an operating system, an application, a boot loader, a database, other programs, and the like.

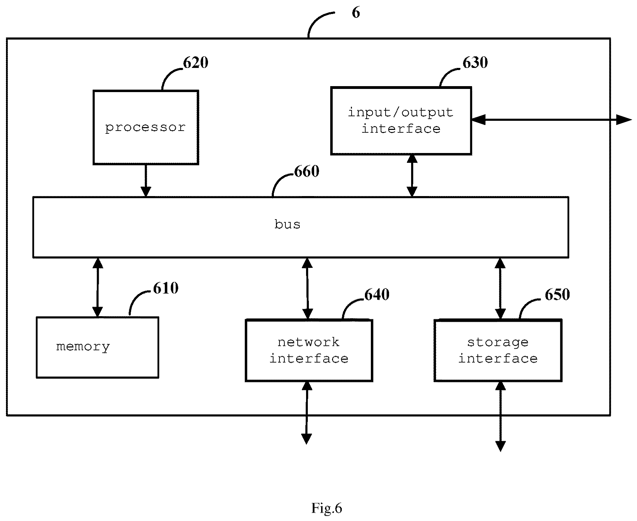

Fig. 6 illustrates a block diagram of the video processing apparatus according to still other embodiments of the present disclosure.

As shown in Fig. 6, the video processing apparatus 6 of this embodiment comprises: a memory 610 and a processor 620 coupled to the memory 610, the processor 620 being configured to perform, based on instructions stored in the memory 610, the video processing method in any of the foregoing embodiments.

The memory 610 may comprise, for example, a system memory, a fixed non-transitory storage medium, and the like. The system memory has thereon stored, for example, an operating system, an application, a bot loader, other programs, and the like.

The video processing apparatus 6 may further comprise an input/output interface 630, a network interface 640, a storage interface 650, and the like. These interfaces 630, 640, 650 and the memory 610 may be connected with the processor 620, for example, via a bus 660. The input/output interface 630 provides connection interfaces for input/output devices such as a display, a mouse, a keyboard, a touch screen, a microphone, and a loudspeaker. The network interface 640 provides connection interfaces for a variety of networking devices. The storage interface 650 provides connection interfaces for external storage devices such as an SD card and a USB flash disk.

It should be appreciated by those skilled in the art that, the embodiments of the present disclosure may be provided as a method, system, or computer program product. Accordingly, the present disclosure may take a form of an entire hardware embodiment, an entire software embodiment, or an embodiment combining software and hardware aspects. Moreover, the present disclosure may take a form of a computer program product implemented on one or more computer-usable non-transitory storage media (comprising, but not limited to, a disk memory, CD-ROM, optical memory, etc.) having computer-usable program code embodied therein.

According to some embodiments of the present disclosure, there is provided a computer program including instructions which when executed by a processor, causes the processor to implement the video processing method in any of the above embodiments.

So far, the video processing method, the video processing apparatus, and the non-transitory computer-readable storage medium according to the present disclosure have been described in detail. Some details well known in the art are not described in order to avoid obscuring the concepts of the present disclosure. Those skilled in the art can now fully appreciate how to implement the technical solutions disclosed herein, in view of the foregoing description.

The method and system of the present disclosure may be implemented in a number of ways. The method and system of the present disclosure may be implemented, for example, by software, hardware, firmware, or any combination of software, hardware, and firmware. The above order for the steps of the method is for illustration only, and the steps of the method of the present disclosure are not limited to the order specifically described above unless specifically stated otherwise. Furthermore, in some embodiments, the present disclosure may further be implemented as programs recorded in a recording medium, the programs comprising machine-readable instructions for implementing the method according to the present disclosure. Therefore, the present disclosure further covers a recording medium storing a program for performing the method according to the present disclosure.
Although some specific embodiments of the present disclosure have been described in detail by examples, it should be understood by those skilled in the art that the above examples are for illustration only and are not intended to limit the scope of the present disclosure. Those skilled in the art should appreciate that modifications may be made to the above embodiments without departing from the scope and spirit of the present disclosure. The scope of the present disclosure is defined by the attached claims.

## Claims

1. A video processing method, comprising:
displaying a video presentation interface, the video presentation interface presenting a video in a media stream;
receiving an interactive operation of a user for the video;
entering an element presentation page of the video in response to the interactive operation of the user for the video; and
presenting at least one element presentation area on the element presentation page, the at least one element presentation area comprising related information of a plurality of first media elements in the video.

2. The video processing method according to claim 1, wherein the presenting at least one element presentation area comprises:
presenting, in the at least one element presentation area, a plurality of first controls, each of the plurality of first control corresponding to one of the plurality of first media elements.

3. The video processing method according to claim 2, wherein the plurality of first controls are arranged in an order in which the plurality of first media elements are played back in the video.

4. The video processing method according to claim 2 or claim 3, further comprising:
switching playback progress in a preview playback area of the element presentation page to a first media element corresponding to a target first control in response to an interactive operation of the user on the target first control.

5. The video processing method according to claim 4, wherein the switching the playback progress in the preview playback area of the element presentation page to the first media element corresponding to the target first control comprises:
pausing a playback of the video in response to the interactive operation of the user on the target first control, in a case where the video is being played back in the preview playback area of the element presentation page; and
continuing, in the preview playback area, the playback of the video starting from the first media element corresponding to the target first control.

6. The video processing method according to claim 5, wherein the interactive operation comprises a swipe operation from a current first control to the target first control,
pausing the playback of the video in response to the user starting the swipe operation from the current first control; and
continuing the playback of the video in response to the user ending the swipe operation at the target first control.

7. The video processing method according to any of claims 4 to 6, wherein the switching the playback progress in the preview playback area of the element presentation page to the first media element corresponding to the target first control comprises:
pausing the playback progress in the preview playback area at the first media element corresponding to the target first control in response to the interactive operation of the user on the target first control, in a case of pausing the playback of the video in the preview playback area of the element presentation page.

8. The video processing method according to claim 7, wherein the interactive operation comprises a swipe operation from a current first control to the target first control,
pausing the playback progress at the first media element corresponding to the target first control in response to the user ending the swipe operation at the target first control.

9. The video processing method according to any of claims 2 to 8, further comprising:
indicating a first control corresponding to a current first media element by using a specified display mode in response to the video being played back to the current first media element of the video in a preview playback area of the element presentation page.

10. The video processing method according to claim 9, wherein the indicating the first control corresponding to the current first media element by using the specified display mode comprises:
positioning a cursor onto the first control corresponding to the current first media element.

11. The video processing method according to any of claims 2 to 10, wherein the presenting related information of the plurality of first media elements in the video comprises:
presenting, on any first control, related information of a first media element corresponding to the any first control.

12. The video processing method according to any of claims 1 to 11, further comprising:
playing back the plurality of first media elements of the video sequentially in a preview playback area of the element presentation page in response to the user entering the element presentation page.

13. The video processing method according to any of claims 1 to 12, further comprising:
entering an element upload page in response to the user selecting an element upload function on the element presentation page, wherein the element upload page comprises at least one second media element; and
generating a to-be-released video of the user by using a selected second media element by the user on the element upload page.

14. The video processing method according to claim 13, wherein the entering the element upload page comprises:
entering the element upload page in response to the user selecting, on the element presentation page, the element upload function by a first control corresponding to any first media element; and
the generating the to-be-released video of the user comprises:
instructing, on the element upload page, the user to select the second media element corresponding to related information of the any first media element.

15. The video processing method according to claim 14, wherein the element upload page comprises a second control corresponding to the first control, and
the instructing the user to select the second media element corresponding to related information of the any first media element comprises:
positioning a cursor on the second control corresponding to the first control in response to the user selecting the element upload function on the first control.

16. The video processing method according to any of claims 13 to 15, wherein the entering the element upload page comprises:
entering the element upload page in response to the user selecting, on the element presentation page, the element upload function by a third control; and
the generating the to-be-released video of the user comprises:
instructing, on the element upload page, the user to select second media elements corresponding to the related information of the plurality of first media elements in order; and
generating the to-be-released video based on a selection order of the second media elements.

17. The video processing method according to claim 16, wherein the element upload page comprises a plurality of second controls corresponding to the plurality of first media elements,
the instructing the user to select the second media elements corresponding to the related information of the plurality of first media elements in order comprises:
moving a cursor onto a second control corresponding to a current first media element.

18. The video processing method according to any of claims 13 to 17, wherein the generating the to-be-released video of the user comprises:
processing the selected second media element to enable a duration of a selected second media element processed matching with a duration of a first media element corresponding to the selected second media element, in a case where a duration of the selected second media element is not matched with a duration of a first media element corresponding to the selected second media element.

19. The video processing method according to claim 18, wherein the processing the selected second media element comprises at least one of:
in a case where the selected second media element is a video element of which a duration is less than the duration of the first media element corresponding to the selected second media element, performing slow playback processing on the video element to enable a duration of the video element after the slow playback processing is equal to the duration of the first media element corresponding to the selected second media element;
in a case where the selected second media element is a video element of which a duration is greater than the duration of the first media element corresponding to the selected second media element, performing interception processing on the video element to enable a duration of the video element after the interception processing is equal to the duration of the first media element corresponding to the selected second media element; or
in a case where the selected second media element is a picture element, setting a display time of the picture element to the duration of the first media element corresponding to the selected second media element.

20. The video processing method according to claim 19, wherein the performing interception processing on the video element comprises:
displaying an editing page in response to the user selecting an element editing control, in a case where the selected second media element is the video element of which the duration is greater than the duration of the first media element corresponding to the selected second media element; and
performing the interception processing on the video element according to a clip of the video element selected by the user on the editing page.

21. The video processing method according to any of claims 13 to 20, further comprising:
prompting, in an area where a plurality of second controls are located, that a plurality of specified second media elements are being uploaded in response to the user confirming, on the element upload page, the plurality of specified second media elements corresponding to the related information of the plurality of first media elements.

22. The video processing method according to claim 21, wherein the prompting, in the area where the plurality of second controls are located, that the plurality of specified second media elements are being uploaded comprises:
changing display brightness of thumbnails of the plurality of specified second media elements in the area where the plurality of second controls are located, to prompt that the plurality of specified second media elements are being uploaded.

23. The video processing method according to any of claims 1 to 22, wherein the element presentation page comprises a preview playback area for playing back the video.

24. A video processing apparatus comprising:
a jumping unit configured to receive an interactive operation of a user for a video in a media stream, and enter an element presentation page of the video in response to the interactive operation of the user for the video in the media stream; and
a presentation unit configured to display a video presentation interface, and present at least one element presentation area on the element presentation page, the at least one element presentation area comprising related information of a plurality of first media elements in the video, the video presentation interface presenting the video in the media stream.

25. The video processing apparatus according to claim 24, wherein
the jumping unit enters an element upload page in response to the user selecting an element upload function on the element presentation page, wherein the element upload page comprises at least one second media element; and
the video processing apparatus further comprises:
an upload unit configured to generate a to-be-released video of the user by using a selected second media element by the user on the element upload page.

26. A video processing apparatus comprising:
a memory; and
a processor coupled to the memory, the processor being configured to perform, based on instructions stored in the memory, the video processing method according to any of claims 1 to 23.

27. A non-transitory computer-readable storage medium having thereon stored a computer program which, when executed by a processor, implements the video processing method according to any of claims 1 to 23.

28. A computer program, comprising:
instructions which when executed by a processor, cause the processor to implement the video processing method according to any of claims 1 to 23.
